(19) Europäisches Patentamt / European Patent Office / Office européen des brevets

(11) **EP 3 600 743 B1**

(12) **EUROPÄISCHE PATENTSCHRIFT**

(45) Veröffentlichungstag und Bekanntmachung des Hinweises auf die Patenterteilung:
**04.08.2021 Patentblatt 2021/31**

(21) Anmeldenummer: **18713867.2**

(22) Anmeldetag: **23.03.2018**

(51) Int Cl.:
**B23F 5/16** *(2006.01)*    **B23F 19/10** *(2006.01)*
**B23F 21/12** *(2006.01)*    **B23F 21/20** *(2006.01)*

(86) Internationale Anmeldenummer:
**PCT/EP2018/057426**

(87) Internationale Veröffentlichungsnummer:
**WO 2018/172516 (27.09.2018 Gazette 2018/39)**

(54) **VERFAHREN ZUM KOMBINIERTEN WÄLZSCHÄLANFASEN UND FEILEN EINES WERKSTÜCKS**

METHOD FOR THE COMBINED CHAMFER SKIVING AND FILING OF A WORKPIECE

PROCÉDÉ COMBINÉ DE CHANFREINAGE PAR DÉCOLLETAGE EN DÉVELOPPANTE ET DE LIMAGE D'UNE PIÈCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.03.2017 DE 102017204891**

(43) Veröffentlichungstag der Anmeldung:
**05.02.2020 Patentblatt 2020/06**

(73) Patentinhaber: **FELSOMAT GmbH & Co. KG**
**75203 Königsbach-Stein (DE)**

(72) Erfinder:
• THIJSSEN, Johan
  3740 Bilzen (BE)
• PESCHINA, Jürgen
  75438 Knittlingen (DE)

(74) Vertreter: **Kohler Schmid Möbus Patentanwälte Partnerschaftsgesellschaft mbB**
**Gropiusplatz 10**
**70563 Stuttgart (DE)**

(56) Entgegenhaltungen:
**DE-A1- 10 309 116    DE-A1-102014 218 082**

EP 3 600 743 B1

**Beschreibung**

Die Erfindung betrifft ein Verfahren zur Bearbeitung eines verzahnten Werkstücks, wobei das Verfahren umfasst einen

Schritt 1) Fertigen einer Fase an dem verzahnten Werkstück durch Wälzschälen,
wobei ein um eine Werkzeugachse rotierendes Werkzeug mit einem verzahnten ersten Bearbeitungsabschnitt in einer Kontaktzone an dem um eine Werkstückachse rotierenden Werkstück abgleitet, wobei die Werkstückachse eine x-Richtung definiert, und das Lot der Kontaktzone auf die Werkstückachse eine z-Richtung definiert, und die x-Richtung, eine y-Richtung und die z-Richtung ein rechtwinkliges Koordinatensystem bilden,
und wobei die Werkzeugachse um einen Azimutwinkel $\varphi 1 \neq 0°$ gegen die x-Richtung verschwenkt ist, und die Werkzeugachse weiterhin um einen Polarwinkel $\Theta 1 < 90°$ gegen die z-Richtung verschwenkt ist.

Ein solches Verfahren ist bekannt geworden aus der DE 10 2014 218 082 A1.

Bei der Herstellung von verzahnten Werkstücken, beispielsweise Zahnrädern, werden üblicherweise Fasen an Zahnkanten von Zähnen des verzahnten Werkstücks angebracht. Diese Fasen können mittels spanender oder umformender Verfahren gefertigt werden. Dabei entstehen jedoch Grate bzw. Materialaufwerfungen, die in einem weiteren Fertigungsschritt entfernt werden müssen.

Die oben genannte DE 10 2014 218 082 A1 beschreibt ein Verfahren zur spanenden Fertigung von Fasen an Zahnkanten. Bei diesem Verfahren wird ein verzahntes Werkzeug um eine Werkzeugachse rotiert, wobei die Werkzeugachse um einen Azimutwinkel $\varphi$ und einen Breitenwinkel $\gamma$ gegenüber einer Werkstückachse des verzahnten Werkstücks verschwenkt ist, so dass eine Schneidkante eines Werkzeugzahns an der Zahnkante abgleitet und eine Fase an dem verzahnten Werkstück gefertigt wird. Dieses Verfahren ähnelt dem bekannten Wälzschälen (es zeichnet sich gegenüber dem Wälzschälen insbesondere durch die zusätzliche Verschwenkung der Werkzeugachse um den Breitenwinkel aus) und wird daher auch als Wälzschälanfasen bezeichnet.

Je nach Schnittrichtung entsteht dabei ein Grat vorwiegend an einer Zahnflanke eines Zahns (beim Anfasen von außen nach innen, d.h. Schnittrichtung von einer Stirnseite in Richtung Zahnflanke) oder an einer Stirnseite (beim Anfasen von innen nach außen, d.h. Schnittrichtung von der Zahnflanke in Richtung Stirnseite).

Es ist grundsätzlich bekannt, einen beim Anfasen einer Zahnkante entstandenen Grat an einer Stirnseite des verzahnten Werkstücks mit einem Feilwerkzeug abzutragen. Das Feilwerkzeug muss zusätzlich zu einem Anfaswerkzeug bereitgestellt und eingesetzt werden. Dazu ist weiterhin eine zur Feilbearbeitung geeignete Werkzeugmaschine erforderlich, ggf. muss zudem das verzahnte Werkstück umgespannt werden. Dies führt insgesamt zu einem großen fertigungstechnischen Aufwand.

Aufgabe der Erfindung

Der Erfindung liegt die Aufgabe zugrunde, auf einfache und schnelle Weise ein angefastes und entgratetes Werkstück bereitzustellen.

Kurze Beschreibung der Erfindung

Diese Aufgabe wird gelöst durch ein Verfahren der eingangs genannten Art, das dadurch gekennzeichnet ist, dass das Werkzeug als ein Kombinationswerkzeug gewählt ist, das zusätzlich zum verzahnten, ersten Bearbeitungsabschnitt weiterhin einen zweiten Bearbeitungsabschnitt aufweist, wobei der zweite Bearbeitungsabschnitt bezüglich einer Schnittebene, die die Werkzeugachse enthält, unter einem Feilschneidenwinkel $\alpha > 0°$ gegenüber dem ersten Bearbeitungsabschnitt verläuft,
dass das Verfahren weiterhin umfasst einen

Schritt 2) Feilen einer Stirnseite des verzahnten Werkstücks, die an die in Schritt 1) gefertigte Fase angrenzt, wobei das rotierende Werkzeug mit dem zweiten Bearbeitungsabschnitt in einer Feilkontaktzone an dem um die Werkstückachse rotierenden Werkstück abgleitet,

und dass die Schritte 1) und 2) in derselben Aufspannung des Werkstücks erfolgen.

Im Rahmen der vorliegenden Erfindung werden das Wälzschälanfasen des verzahnten Werkstücks und das Feilen des Werkstücks, um Grate von der Stirnseite des Werkstücks zu entfernen, in einer Aufspannung des Werkstücks kombiniert. Dafür wird ein Kombinationswerkzeug eingesetzt, welches sowohl einen ersten Bearbeitungsabschnitt (erste Bearbeitungszone) für das Wälzschälanfasen als auch einen zweiten Bearbeitungsabschnitt (zweite Bearbeitungszone) für das Feilen aufweist. Entsprechend kann mit demselben Werkzeug, und entsprechend mit derselben Werkzeugspindel, die gesamte Wälzschäl- und Feilbearbeitung erfolgen. Dadurch ist zum einen eine schnelle Bearbeitungsabfolge möglich, und zum anderen ist der benötigte Maschinenaufbau sehr einfach.

Das Wälzschälanfasen in Schritt 1) kann wie in der (oben bereits diskutierten) DE 10 2014 218 082 A1 beschrieben erfolgen.

Beim Wälzschälanfasen in Schritt 1) wird die Fase typischerweise durch

Schneiden von innen nach außen (vom Inneren der Verzahnung des Werkstücks auf die Stirnfläche des Werkstücks zu, im Wesentlichen bezüglich der axialen Richtung) erzeugt, so dass sich ein Grat vorwiegend an der Stirnfläche bildet; dieser wird mit dem Feilen in Schritt 2) entfernt.

In Schritt 1) wird der Azimuthwinkel (auch genannt Achskreuzwinkel) $\varphi1$ in der xy-Ebene (oder in einer dazu parallelen x'y'-Ebene) gegen die x-Richtung (oder eine dazu parallele x'-Richtung) gemessen; dazu kann die Werkzeugachse auf die xy-Ebene (oder x'y'-Ebene) projiziert werden. Der Polarwinkel $\Theta1$ wird gegen die z-Richtung (oder gegen eine dazu parallele Richtung z') gemessen. Der Ergänzungswinkel $\gamma1=90°-\Theta1$ wird auch als Breitenwinkel bezeichnet. Entsprechendes gilt für den Azimuthwinkel $\varphi2$ und den Polarwinkel $\Theta2$ in Schritt 2). Man beachte, dass die Zahlenindices den Schritt 1) oder 2) des Verfahrens angeben.

Die Definition der Richtungen x, y, z erfolgt über die Werkstückachse und die Kontaktzone des Schritts 1), und wird auch für Schritt 2) beibehalten, ungeachtet einer etwaigen Verschiebung der Feilkontaktzone von Schritt 2) gegenüber der Kontaktzone von Schritt 1).

Für den Feilschneidenwinkel $\alpha$ gilt meist $10°\leq\alpha\leq80°$, und oft auch $15°\leq\alpha\leq65°$. Erster und zweiter Bearbeitungsabschnitt verlaufen grundsätzlich um den vollständigen Umfang des Werkzeugs herum, typischerweise eben (scheibenförmig) oder konisch, unbeschadet einer etwaigen Zusammensetzung aus einzelnen Schneiden.

## Bevorzugte Ausführungsformen der Erfindung

Bei einer besonders bevorzugten Variante des erfindungsgemäßen Verfahrens erfolgt das Feilen in Schritt 2) mit einem Polarwinkel $\Theta2$ des Werkzeugs, der gleich ist dem Polarwinkel $\Theta1$ beim Fertigen der Fase durch Wälzschälen in Schritt 1). Das Beibehalten des Polarwinkels vereinfacht die Verfahrensführung und den benötigten Maschinenaufbau erheblich; dennoch bleibt eine variantenreiche Bearbeitung von Werkstücken möglich. Zugleich kann der beibehaltene Polarwinkel dazu beitragen, Störkonturen zu vermeiden, die die Bearbeitung behindern.

Besonders bevorzugt ist eine Verfahrensvariante, bei der der Feilschneidenwinkel $\alpha$ des Werkzeugs so gewählt ist, dass gilt:

$$\alpha = 90° - \Theta2 + \kappa,$$

mit $\kappa$: Konuswinkel der Stirnseite des Werkstücks gegenüber einem Radiusvektor des Werkstücks. Bei dieser Variante sind besonders einfache geometrische Verhältnisse am Werkzeug möglich; der Zusammenhang zwischen Feilschneidenwinkel und Konsuwinkel ist besonders einfach. Weiterhin sind besonders einfache Anordnungen des Werkzeugs am Werkstück möglich. In vielen Anwendungsfällen ist $\kappa=0$, d.h. die Stirnseite liegt in einer Ebene senkrecht zur Werkstückachse.

Besonders bevorzugt ist hierbei eine Weiterbildung, bei der in Schritt 2) der Azimuthwinkel zu $\varphi2=0$ gewählt ist. Ein Azimuthwinkel von $\varphi2=0°$ ist leicht einzustellen und vermeidet Störkonturen. In diesem Fall kann die Feilbearbeitung zudem einfach erfolgen, indem der Ort der Feilkontaktzone in Schritt 2) dem Ort der Kontaktzone von Schritt 1) entspricht. Falls $\kappa=0°$ ist, kann die Feilkontaktzone auch frei bestimmt werden (entsprechend dem Ort der Kontaktzone in Schritt 1) oder auch demgegenüber in y- und/oder z-Richtung versetzt). In dieser Weiterbildung kann ggf. die Einbringung von unerwünschten Krümmungen an der Stirnseite des Werkstücks im Rahmen von Schritt 2) vermieden werden.

Vorteilhaft ist zudem eine Weiterbildung, die vorsieht, dass in Schritt 2) der Azimuthwinkel zu $\varphi2\neq0$ gewählt ist und weiterhin die Feilkontaktzone gegenüber der Kontaktzone von Schritt 1) in y-Richtung und/oder z-Richtung versetzt ist. Dieses Vorgehen wird vor allem dann gewählt, wenn ein Azimuthwinlkel $\varphi2=0°$ nicht eingestellt werden kann, etwa aufgrund von baulichen Begrenzungen der Werkzeugmaschine oder aufgrund der Werkzeug- oder Werkstückgeometrie. Durch den Azimuthwinkel $\varphi2\neq0$ wird der "effektive" Polarwinkel $\Theta2'$ (projiziert in die xz-Ebene) verkleinert, was durch den Versatz der Feilkontaktzone (bei einem Konuswinkel $\kappa>0$) kompensiert werden kann.

Besonders bevorzugt ist weiterhin eine Verfahrensvariante, die vorsieht, dass der Feilschneidenwinkel $\alpha$ des Werkzeugs so gewählt ist, dass gilt:

$$\alpha = 90° - \Theta2 + \kappa + \xi,$$

mit $\kappa$: Konuswinkel der Stirnseite des Werkstücks gegenüber einem Radiusvektor des Werkstücks, und $\xi$: Versatzwinkel, wobei $|\xi| > 0$, und dass in Schritt 2) der Azimuthwinkel zu $\varphi2\neq0$ gewählt ist und/oder die Feilkontaktzone gegenüber der Kontaktzone von Schritt 1) in y-Richtung und/oder z-Richtung versetzt ist. Durch den von null verschieden Azimuthwinkel und/oder das Versetzen der Feilkontaktzone gegenüber der Kontaktzone wird beim Feilen der Versatzwinkel (der einer "Fehlpassung" von $\alpha$ und $\kappa$ entspricht) ausgeglichen, so dass das Werkstück mit einem gewünschten Konuswinkel $\kappa$ der Stirnseite mit dem zu Verfügung stehenden Werkzeug mit Feilschneidenwinkel $\alpha$ gefeilt werden kann. Entsprechend wird es möglich, mit einem Werkzeugtyp (mit einem bestimmten Feilschneidenwinkel a) verschiedene Werkstücktypen (die unterschiedliche Konuswinkel $\kappa$ aufweisen) zu bearbeiten. Der erforderliche Azimuthwinkel $\varphi2$ und/oder der erforderliche Versatz der Feilkontaktzone kann numerisch bestimmt werden. Mit einem Azimuthwinkel $\varphi2\neq0$ kann ein für den gewünschten Konuswinkel $\kappa$ "zu großer" Feilschneidenwinkel $\alpha$ ausgeglichen werden, und mit einem Versatz in y-Richtung und/oder z-Richtung kann ein für den gewünschten Konuswinkel $\kappa$ "zu kleiner" Feilschneidenwinkel $\alpha$ ausgeglichen werden (bei einem Konuswinkel $\kappa>0$). In vielen Anwendungsfällen ist $\kappa=0$, d.h. die Stirnseite liegt in einer Ebene senkrecht zur Werkstückachse.

Eine vorteilhafte Verfahrensvariante sieht vor, dass in der Schnittebene, die die Werkzeugachse enthält, der verzahnte, erste Bearbeitungsabschnitt des Werkzeugs senkrecht zur Werkzeugachse verläuft. Mit anderen Worten, der erste Bearbeitungsabschnitt bzw. seine Einhüllende verläuft senkrecht zur Werkzeugachse. Dadurch ist die Verfahrensführung beim Wälzschälanfasen von Schritt 1) besonders einfach. Zudem ist die Anbringung des zweiten Bearbeitungsabschnitts gut in Geometrien möglich, die Störkonturen vermeiden.

Besonders bevorzugt ist weiterhin eine Verfahrensvariante, bei der für den Azimuthwinkel $\varphi 1$ in Schritt 1) und einen Azimuthwinkel $\varphi 2$ in Schritt 2) gilt: $|\varphi 1|>|\varphi 2|$. Die Reduzierung des Azimuthwinkels $\varphi 2$ bzw. von dessen Betrag in Schritt 2) (bevorzugt wobei der Azimuthwinkel $\varphi 2$ auf null gesetzt wird) trägt dazu bei, Störkonturen zu vermeiden. Typischerweise gilt für $\varphi 1$ dabei $75° \geq |\varphi 1| \geq 15°$. Weiterhin gilt typischerweise für $\Theta 1$ zudem $85° \geq |\Theta 1| \geq 15°$ und für $\Theta 2$ ebenfalls $85° \geq |\Theta 2| \geq 15°$. Zudem gilt meist $|\varphi 1| \geq |\varphi 2|+10°$, und häufig auch $|\varphi 1| \geq |\varphi 2|+20°$.

Bei einer bevorzugten Verfahrensvariante bildet der zweite Bearbeitungsabschnitt eine definierte Schneide aus. In diesem Fall ist der zweite Bearbeitungsabschnitt verzahnt, und Grate an der Stirnseite können mit einzelnen Feilschneiden gezielt abgetragen werden. Die Grate können bei besonders geringem Materialabtrag entfernt werden.

Bei einer alternativen, vorteilhaften Verfahrensvariante bildet der zweite Bearbeitungsabschnitt eine undefinierten Schneide aus. In diesem Fall bildet der zweite Bearbeitungsabschnitt eine gekörnte, umlaufende Schleifffläche aus, mit der Grate an der Stirnseite abgetragen werden. Eine undefinierte Schneide ist besonders einfach und robust.

*Erfindungsgemäße Vorrichtung zur Bearbeitung eines verzahnten Werkstücks*

In den Rahmen der vorliegenden Erfindung fällt weiterhin eine Vorrichtung zur Bearbeitung eines verzahnten Werkstücks, wobei die Vorrichtung ausgebildet ist

- mit einer Werkstückspindel zum Rotieren des verzahnten Werkstücks um eine Werkstückachse, die entlang einer x-Richtung verläuft,
- mit einer Werkzeugspindel zum Rotieren eines Werkzeugs um eine Werkzeugachse,
- das Werkzeug, das auf der Werkzeugspindel angeordnet ist, mit einem verzahnten, ersten Bearbeitungsabschnitt zum Fertigen einer Fase am verzahnten Werkstück durch Wälzschälen,
- und mit einer Werkzeugspindel-Halterung, an welcher die Werkzeugspindel gehalten ist, wobei die Werkzeugspindel-Halterung mittels einer motorischen Verfahreinrichtung linear in die x-Richtung, eine y-Richtung und eine z-Richtung verfahrbar ist, wobei die x-Richtung, die y-Richtung und die z-Richtung ein rechtwinkliges Koordinatensystem bilden, wobei die Werkzeugspindel-Halterung mittels einer motorischen Dreheinrichtung verschwenkbar ist, so dass zumindest ein Azimuthwinkel $\varphi$, mit dem die Werkzeugachse gegen die x-Richtung verschwenkt ist, verstellbar ist und ein Azimutwinkel $\varphi \neq 0°$ einstellbar ist, und wobei weiterhin ein Polarwinkel $\Theta < 90°$, mit dem die Werkzeugachse gegen die z-Richtung verschwenkt ist, von der Vorrichtung vorgegeben ist oder mit der Vorrichtung einstellbar ist,

dadurch gekennzeichnet,

dass das Werkzeug als Kombinationswerkzeug mit dem verzahnten, ersten Bearbeitungsabschnitt und weiterhin mit einem zweiten Bearbeitungsabschnitt zum Feilen einer Stirnseite des Werkstücks ausgebildet ist, wobei der zweite Bearbeitungsabschnitt bezüglich einer Schnittebene, die die Werkzeugachse enthält, unter einem Feilschneidenwinkel $\alpha > 0°$ gegenüber dem ersten Bearbeitungsabschnitt verläuft,

und dass die Vorrichtung dazu ausgebildet ist, nacheinander bei auf der Werkstückspindel angeordnetem verzahntem Werkstück in derselben Aufspannung des Werkstücks zunächst mit dem verzahnten, ersten Bearbeitungsabschnitt eine Fase am Werkstück durch Wälzschälen zu fertigen und danach mit dem zweiten Bearbeitungsabschnitt die Stirnseite des Werkstücks, die an die gefertigte Fase angrenzt, zu feilen. Mit der erfindungsgemäßen Vorrichtung ist es auf einfache, schnelle und kostengünstige Weise möglich, eine Fase an einem verzahnten Werkstück mittels Wälzschälanfasen zu fertigen und durch Feilen zu entgraten. Durch das Kombinationswerkzeug ist es möglich, mit derselben Werkzeugspindel sowohl die Fase zu fertigen als auch Grate an der Stirnseite des Werkstücks zu entfernen. Das Werkstück braucht dabei nicht umgespannt zu werden. Insbesondere kann die erfindungsgemäße Vorrichtung in einem oben beschriebenen, erfindungsgemäßen Verfahren oder einer der zugehörigen Varianten verwendet werden. Durch die Werkzeugspindelhalterung mit motorischer Dreheinrichtung ist es leicht möglich, die relative Orientierung des Werkzeugs zwischen dem Wälzschälanfasen und dem Feilen anzupassen, insbesondere bezüglich des Azimuthwinkels $\varphi$; zudem kann mittels einer Drehung um 180° zwischen Vorderseite und Rückseite des Werkstücks (bzw. den beiden Stirnseiten der Verzahnung) bei der Bearbeitung rasch gewechselt werden. Mit der Verfahreinrichtung kann die Position des Werkzeugs gegenüber dem Werkstück zwischen dem Wälzschälanfasen und dem Feilen angepasst werden, soweit erforderlich, insbesondere in y-Richtung und z-Richtung; zudem kann die Werkzeugzustellung erfolgen. Man beachte, dass der Azimuthwinkel $\varphi$ und der Polarwinkel $\Theta$ nachfolgend mit einem Index 1 oder 2 versehen werden, wenn der Azimuthwinkel oder der Polarwinkel in einem der Schritte 1) (Wälzschälanfasen) oder 2) (Feilen) bezeichnet wird.

Bevorzugt ist eine Ausführungsform der erfindungsgemäßen Vorrichtung, die vorsieht, dass die Werkzeugspindel-Halterung mittels der motorischen Dreheinrichtung um eine Drehachse rotierbar ist, die entlang der z-Richtung verläuft. Dadurch kann über die Drehachse der Azimuthwinkel $\varphi$ als Winkel zwischen der Werkzeugachse und der x-Richtung bezüglich der xy-Ebene direkt eingestellt werden, was Maschinenaufbau und Maschineneinstellung vereinfacht.

Vorteilhaft ist eine Ausführungsform, bei der durch die Vorrichtung der Polarwinkel $\Theta$ vorgegeben ist. Dadurch kann ein besonders einfacher und robuster Maschinenaufbau realisiert werden.

Bei einer bevorzugten Ausführungsform ist vorgesehen, dass auf der Werkzeugspindel-Halterung die Werkzeugspindel und eine weitere Werkzeugspindel zum Rotieren eines weiteren Werkzeugs um eine weitere Werkzeugachse gehalten sind, insbesondere wobei das weitere Werkzeug ebenfalls als Kombinationswerkzeug ausgebildet ist. Mit dem Werkzeug (Kombinationswerkzeug) und dem weiteren Werkzeug können die linksseitige und rechtsseitige Fase der Zähne des Werkstücks derselben Werkstückseite gefertigt werden, und mit einem der Werkzeuge (bei nur einem Kombinationswerkzeug) oder auch mit beiden Werkzeugen (bei zwei Kombinationswerkzeugen) kann die Entgratung des Werkstücks erfolgen. Die beiden Fasen können dadurch sehr schnell gefertigt und ebenso das Werkstück schnell entgratet werden.

Bei einer vorteilhaften Ausführungsform ist die Vorrichtung ausgebildet zur Durchführung eines oben beschriebenen, erfindungsgemäßen Verfahrens. Weitere Vorteile der Erfindung ergeben sich aus der Beschreibung und der Zeichnung. Ebenso können die vorstehend genannten und die noch weiter ausgeführten Merkmale jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung

Die Erfindung ist in der Zeichnung dargestellt und wird anhand von Ausführungsbeispielen näher erläutert. Es zeigen:

Fig. 1    eine schematische Perspektivansicht von Werkstück und Werkzeug während Schritt 1) des erfindungsgemäßen Verfahrens;

Fig. 2a    eine schematische Seitenansicht (entlang der y-Achse) von Werkstück und Werkzeug während Schritt 2) des erfindungsgemäßen Verfahrens, in einer Variante mit $\varphi2=0$ und $\kappa=0$;

Fig. 2b    eine schematische Perspektivansicht zur Variante von Fig. 2a;

Fig.3a    eine schematische Seitenansicht (entlang der y-Achse) von Werkstück und Werkzeug während Schritt 2) des erfindungsgemäßen Verfahrens, in einer Variante mit $\varphi=0$ und $\kappa\neq0°$, wobei der Feilschneidenwinkel $\alpha$ auf den Konuswinkel $\kappa$ abgestimmt ist;

Fig. 3b    eine schematische Perspektivansicht zur Variante von Fig. 3a;

Fig.4a    eine schematische Seitenansicht (entlang der y-Achse) von Werkstück und Werkzeug während Schritt 2) des erfindungsgemäßen Verfahrens, in einer Variante mit $\varphi2\neq0$ und $\kappa=0°$;

Fig. 4b    eine schematische Perspektivansicht zur Variante von Fig. 4a;

Fig.5a    eine schematische Seitenansicht (entlang der y-Achse) von Werkstück und Werkzeug während Schritt 2) des erfindungsgemäßen Verfahrens, in einer Variante mit $\varphi=0$ und $\kappa\neq0°$, wobei der Feilschneidenwinkel $\alpha$ nicht auf den Konuswinkel $\kappa$ abgestimmt ist, mit verschiedenen relativen Verfahrpositionen des Werkzeugs;

Fig. 5b    eine schematische Perspektivansicht auf das Werkstück aus der Variante von Fig. 5a;

Fig. 6    eine schematische Ansicht einer Ausführungsform einer erfindungsgemäßen Vorrichtung zur Durchführung des erfindungsgemäßen Verfahrens.

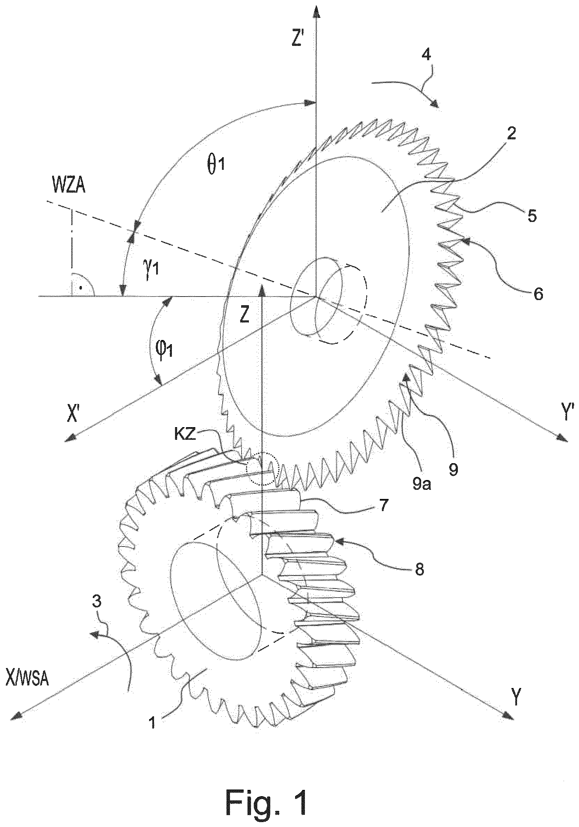

Die **Fig. 1** illustriert in einer schematischen Perspektivansicht beispielhaft den Schritt 1) des erfindungsgemäßen Verfahrens, wobei an einem verzahnten Werkstück 1 mittels eines verzahnten Werkzeugs 2 eine Fase nach dem Prinzip des Wälzschälanfasens gefertigt wird.

Das Werkstück 1 dreht sich dabei um eine Werkstückachse WSA in Drehrichtung 3, und das Werkzeug 2 um eine Werkzeugachse WZA in Drehrichtung 4. Dabei gleiten die in Fig. 1 auf einer Rückseite des Werkzeugs 2 liegenden Schneiden 5 eines ersten Bearbeitungsabschnitts 6 des Werkzeugs 2 an den rechtsseitigen Kanten 7 der Zähne einer in Fig. 1 rückwärtigen Stirnseite 8 des Werkstücks 1 ab und erzeugen dort eine Fase. Dabei wird Werkstückmaterial aus der Verzahnung des Werkstücks 1 axial von innen nach außen auf die rückwärtige Stirnseite 8 zu gefördert, wodurch sich an der rückwärtigen Stirnseite 8 Grate ausbilden (nicht näher dargestellt).

An einer in Fig. 1 Vorderseite des Werkzeugs 2 ist ein zweiter Bearbeitungsabschnitt 9 ausgebildet, der für das Feilen in Schritt 2) vorgesehen ist, und während Schritt 1) noch nicht benutzt wird. Der zweite Bearbeitungsabschnitt 9 ist hier mit einer definierten (geometrisch bestimmten) Schneide ausgebildet, setzt sich also aus einzelnen Feilschneiden (Schneidkanten) 9a zusammen.

Im Rahmen des Wälzschälanfasens von Schritt 1) ist das Werkzeug 2 gegenüber dem Werkstück 1 besonders orientiert. Die Werkstückachse WSA definiert eine x-Richtung, und das Lot der Kontaktzone KZ, in welcher sich Werkzeug 2 und Werkstück 1 berühren, definiert eine z-Richtung, womit ein rechtwinkliges (kartesisches) xyz-Koordinatensystem definiert werden kann.

Die Werkzeugachse WZA ist gegenüber der x-Richtung um einen Azimuthwinkel $\varphi 1$ (auch genannt Achskreuzwinkel) verschwenkt (hierbei indiziert die 1 den Schritt 1), gemessen in der xy-Ebene. Man beachte, dass $\varphi 1 \neq 0°$, typischerweise mit $|\varphi 1| \geq 20°$. Weiterhin ist die Werkzeugachse WZA gegenüber der z-Richtung um einen Polarwinkel $\Theta 1$ verschwenkt; dies entspricht einer Verschwenkung um den Winkel $\gamma 1$ (auch genannt Breitenwinkel) aus der xy-Ebene heraus. Man beachte, dass $\Theta 1 > 0$, typischerweise mit $\Theta 1 \geq 20°$. Um die Verschwenkungen leichter zu sehen, sind in Fig. 1 parallelverschobene Hilfskoordinaten x', y', z' eingezeichnet, an denen die Winkelverhältnisse besser erkennbar sind.

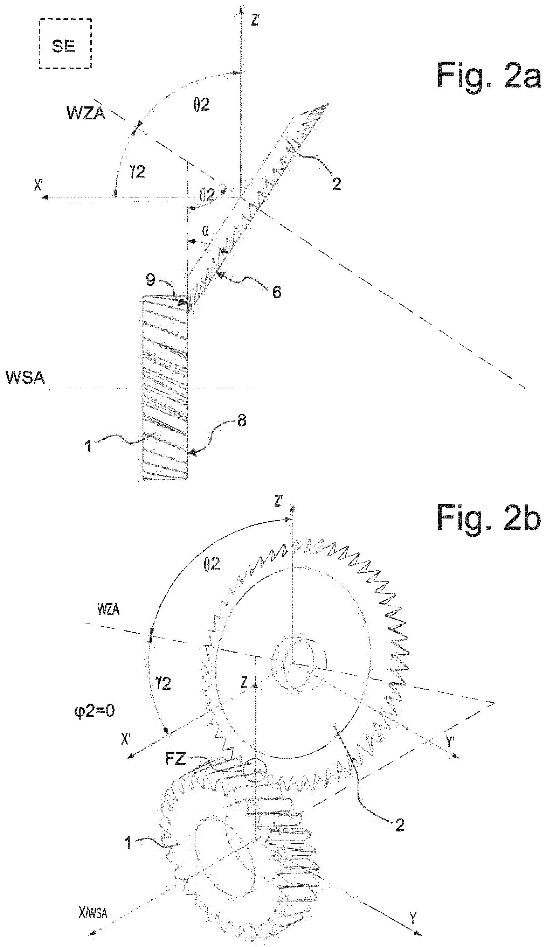

Auf das Wälzschälanfasen von Schritt 1) folgt in einem Schritt 2) ein Feilen der Stirnseite 8 des Werkstücks 2, an welche die gefertigten Fasen angrenzen. Dieses Feilen kann beispielsweise in den in Fig. 2a/2b, Fig. 3a/3b, Fig. 4a/4b oder Fig. 5a/5b vorgestellten Varianten erfolgen, die nachfolgend vorgestellt werden sollen. Allen diesen Varianten gemeinsam ist, dass sie mit dem selben Werkzeug 2 wie beim Wälzschälanfasen am Werkstück 1 in der gleichen Aufspannung des Werkstücks 1 erfolgen, jedoch unter Nutzung des zweiten Bearbeitungsabschnitts 9.

In der in **Fig. 2a** und **Fig. 2b** vorgestellten Variante wird für Schritt 2) der Azimuthwinkel $\varphi 2$ auf nunmehr 0° eingestellt ("zurückgedreht"). Der Polarwinkel $\Theta 2$ bleibt unverändert, also $\Theta 2 = \Theta 1$. Die Stirnseite 8 des Werkstücks 1 bzw. der Verzahnung des Werkstücks 1 (soweit sie zu bearbeiten ist) verläuft hier senkrecht zur Werkstückachse WSA, also mit einem Konuswinkel $\kappa = 0°$ (daher ist der Konuswinkel $\kappa$ nicht näher eingezeichnet).

Wie insbesondere in Fig. 2a ersichtlich, kann dem Werkzeug 2 ein Feilschneidenwinkel $\alpha$ zugeordnet werden. In einer Schnittebene SE durch das Werkzeug 2, die die Werkzeugachse WZA enthält (in Fig. 2a die Zeichenebene), liegt der Feilschneidenwinkel $\alpha$ zwischen der Verlaufsrichtung (Einhüllenden) des ersten Bearbeitungsabschnitts 6 (hier senkrecht zur Werkzeugachse WZA) und der Verlaufsrichtung (Einhüllenden) des zweiten Bearbeitungsabschnitts 9. Man beachte, dass der erste und zweite Bearbeitungsabschnitt 6, 9 umlaufend ausgebildet sind.

Der Feilschneidenwinkel $\alpha$ ist hier zu

$$\alpha = 90° - \Theta 2$$

gewählt, so dass sich in der gezeigten Variante mit dem Polarwinkel $\Theta 2$ eine senkrechte Anlage des zweiten Bearbeitungsabschnitts 9 an die Stirnseite 8 ergibt.

In der gezeigten Variante ist die Feilkontaktzone FZ, in welcher das Werkzeug 2 das Werkstück 1 im Rahmen von Schritt 2) berührt, im Wesentlichen am selben Ort wie zuvor die Kontaktzone in Schritt 1); es ist jedoch in diesem Fall möglich, die Anlage zwischen Werkzeug 2 und Werkstück 1 auch auf der Stirnseite in y und z auf einer Kreisbahn zu verschieben, falls gewünscht.

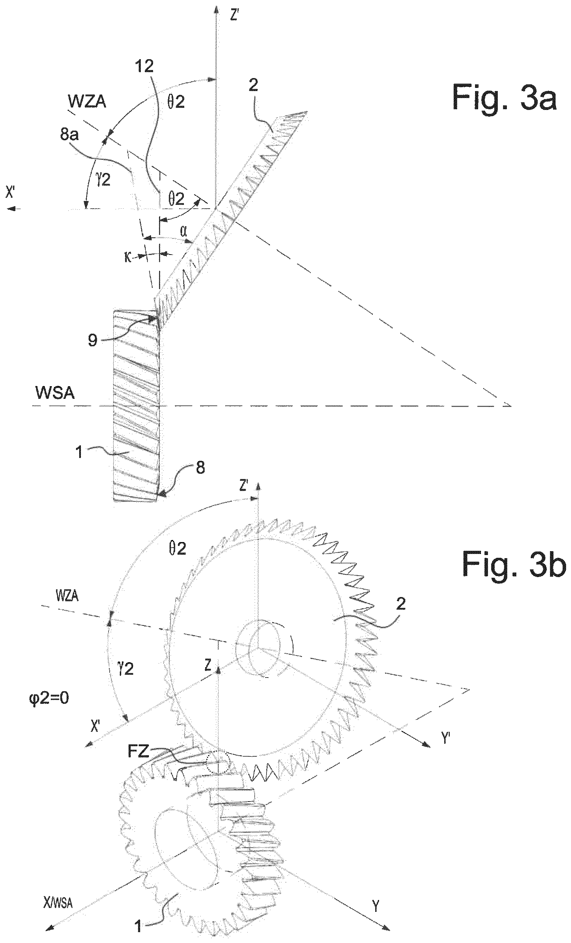

**Fig. 3a** und **Fig. 3b** zeigen eine Variante, in der am Werkstück 1 die Stirnseite 8 mit einer Konusform gefertigt werden soll, entsprechend einem Konuswinkel $\kappa$, der hier ca. 10° beträgt. Der Konuswinkel $\kappa$ wird dabei zwischen der Stirnseite 8 der Verzahnung des Werkstücks 1 (vgl. die Hilfslinie der Stirnseitenverlängerung 8a) und einem Radiusvektor 12 von der Werkstückachse WSA gemessen, hier in der xz-Ebene.

In dieser Variante wird ebenfalls für Schritt 2) der Azimuthwinkel $\varphi 2$ auf 0° eingestellt ("zurückgedreht"). Der Polarwinkel $\Theta 2$ bleibt unverändert, also $\Theta 2 = \Theta 1$. Zudem bleibt die Feilkontaktzone FZ, in welcher das Werkzeug 2 das Werkstück 1 im Rahmen von Schritt 2) berührt, im Wesentlichen am selben Ort wie zuvor die Kontaktzone in Schritt 1). Um entsprechend dem Konuswinkel $\kappa$ eine Anlage des zweiten Bearbeitungsabschnitts 9 an der konusförmigen Stirnseite 8 zu erreichen, ist der Feilschneidenwinkel $\alpha$ gewählt zu

$$\alpha = 90° - \Theta 2 + \kappa.$$

In den beiden vorigen Varianten wurde der Azimuthwinkel $\varphi 2$ jeweils auf 0° für Schritt 2) eingestellt. Wird aber ein größerer Azimuthwinkel $\varphi 2$ in Schritt 2) als 0° gewählt, so führt das dazu, dass der zweite Bearbeitungsabschnitt 9 effektiv vom Werkstück 1 wegschwenkt, und es zu einer steileren Anlage des zweiten Bearbeitungsabschnitts 9 am Werkstück 1 kommt. Dadurch ist es möglich, mit einem Werkzeug 2 mit einem Feilschneidenwinkel $\alpha$ auch Werkstücke mit Konuswinkel $\kappa$ zu fertigen, wobei gilt

$$\alpha > 90° - \Theta 2 + \kappa.$$

Mit anderen Worten, durch den Azimuthwinkel $\varphi 2 \neq 0°$ sind bei gegebenem Feilschneidenwinkel $\alpha$ kleinere Konuswinkel $\kappa$ möglich als mit Azimuthwinkel $\varphi = 0°$; insbesondere sind verschiedene Konuswinkel $\kappa$ für eine Bearbeitung zugänglich.

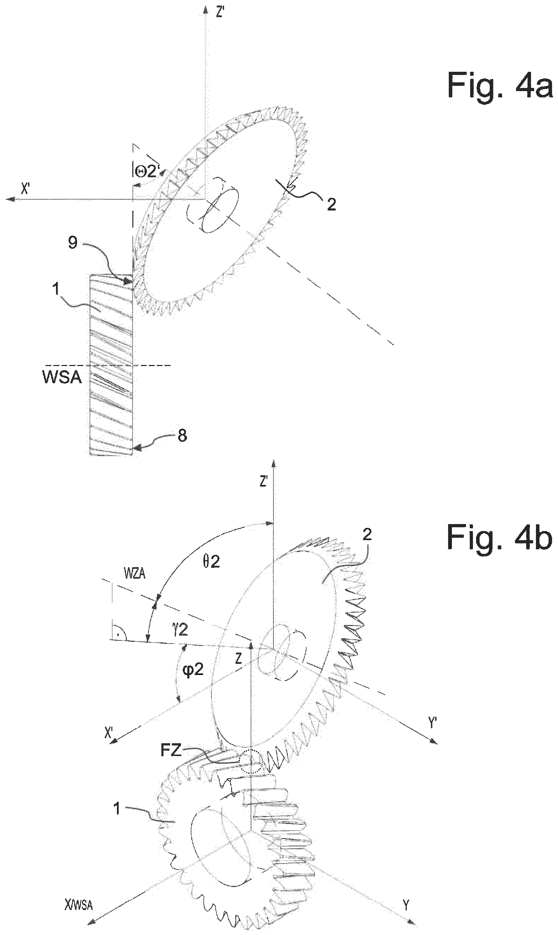

Dies soll anhand der **Fig. 4a** und **Fig. 4b** veranschaulicht werden. In dieser Variante wird in Schritt 2) ein Azimuthwinkel $\varphi 2 \neq 0°$ beibehalten, hier mit $\varphi 2$ ca. 45°.

Der Polarwinkel $\Theta2$ bleibt gegenüber dem Polarwinkel $\Theta1$ von Schritt 1) wiederum unverändert. Weiterhin ist der Feilschneidenwinkel $\alpha$ hier wie in der Variante von Fig. 3a und Fig. 3b gewählt, also so groß, dass bei Anlage wie in Fig. 3a (mit $\varphi2=0°$) ein Konuswinkel $\kappa$ von ca. 10° erzeugt würde.

Durch den eingestellten Azimuthwinkel $\varphi2$ ist es aber möglich, mit demselben Werkzeug 2 am Werkstück 1 einen Konuswinkel $\kappa=0°$ zu fertigen, also eine zur Werkstückachse WSA senkrechte Stirnseite 8. Der Azimuthwinkel $\varphi2$ bewirkt, dass der Polarwinkel $\Theta2$ in Projektion auf die xz-Ebene (bzw. x'z'-Ebene) nur noch als $\Theta2'<\Theta2$ erscheint, wobei ungefähr gilt

$$\Theta2'= \Theta2-\xi$$

mit $\xi$: Versatzwinkel. Um diesen Versatzwinkel $\xi$ vermindert sich der effektiv gefertigte Konuswinkel $\kappa$, so dass durch die Verschwenkung des Azimuthwinkels $\varphi2\neq0$ gilt

$$\alpha=90°-(\Theta2-\xi)+\kappa$$

oder umgeformt

$$\alpha=90°-\Theta2+\kappa+\xi.$$

In der Variante von Fig. 4a, 4b ist dabei $\xi$ stets positiv.

In der Variante von Fig. 4a und Fig. 4b ist wiederum die Feilkontaktzone FZ in Schritt 2) im Wesentlichen am gleichen Ort wie die Kontaktzone im Schritt 1) zuvor; es wäre jedoch auch möglich, die Feilkontaktzone in y und z auf einer Kreisbahn zu verschieben, falls gewünscht.

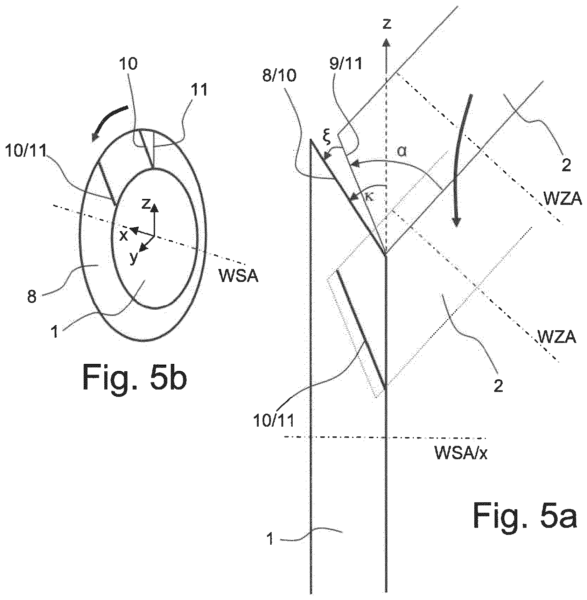

Im Falle eines Werkstücks mit konusförmiger Stirnseite 8, also mit Konuswinkel $\kappa\neq0$, kann der mögliche relative Anlagewinkel des zweiten Bearbeitungsabschnitts 9 an der Stirnseite 8 des Werkstücks 1 auch noch durch eine Verschiebung der Feilkontaktzone FZ in y- und/oder z-Richtung angepasst werden, wie in der Variante von **Fig. 5a** und **Fig. 5b** veranschaulicht wird. Man beachte, dass in beiden Figuren die Verzahnungen von Werkstück 1 und Werkzeug 2 nicht näher dargestellt sind, und in Fig. 5b zur besseren Übersicht das Werkzeug nicht dargestellt wurde.

In dieser Variante wird in Schritt 2) ein Azimuthwinkel $\varphi2=0°$ eingestellt ("zurückgedreht"). Der Polarwinkel $\Theta2$ bleibt gegenüber dem Polarwinkel $\Theta1$ von Schritt 1) wiederum unverändert.

Wie in Fig. 5a ersichtlich ist, ist der Feilschneidenwinkel $\alpha$ des Werkzeugs 2 hier zu klein, um in der oben gezeigten Position (dünn durchgezogen dargestellt) zu einer linienhaften Anlage an die zu fertigende konusförmige Stirnseite 8 des Werkstücks 1 (fett dargestellt) zu kommen. Diese obere Position entspricht hier einem Ort der Feilkontaktzone, der identisch ist dem Ort der Kontaktzone aus dem vorangegangenen Schritt 1). Es bleibt ein Öffnungswinkel, der einem notwendigen Versatzwinkel $\xi$ entspricht, um eine linienhafte gegenseitige Anlage zu erreichen. Dieser Öffnungswinkel ist auch in Fig. 5b für die obere Position zu sehen, in der jeweils eine lokale Konturlinie 10 des Werkstücks 1 (fett dargestellt) und eine lokale Konturlinie 11 des Werkzeugs (dünn durchgezogen dargestellt) angedeutet ist.

Wenn das Werkzeug 2 relativ zum Werkstück 1 entlang der konusförmigen Stirnseite 8 wandert, also entlang einem Kreisbogen auf der Stirnseite 8 der Verzahnung des Werkstücks 1 (beschreibbar durch einen y- und z-Versatz), beginnt sich durch die Schrägung der konusförmigen Stirnseite 8 und durch die Schrägung des zweiten Bearbeitungsabschnitts 9 der Öffnungswinkel zu schließen, bis schließlich an einer unteren Position des Werkzeugs 2 (gepunktet dargestellt) es zu einem näherungsweise linienhaften Kontakt von Werkzeug 2 und Werkstück 1 kommt. Die beiden Konturlinien 10, 11 sind dann in Überdeckung.

Dadurch ist es möglich, mit einem Werkzeug 2 mit einem Feilschneidenwinkel $\alpha$ auch Werkstücke mit Konuswinkel $\kappa$ zu fertigen, wobei gilt

$$\alpha<90°-\Theta2+\kappa.$$

Mit anderen Worten, mit einem Werkzeug 2, das einen bestimmten Feilschneidenwinkel $\alpha$ aufweist, können Werkstücke 1 mit unterschiedlichen Konuswinkeln $\kappa$ bearbeitet bzw. gefeilt werden. Infolge des Versatzes in y- und z-Richtung ist es möglich, größere Konuswinkel $\kappa$ zu bearbeiten als ohne den Versatz.

Durch die Verschiebung des Werkstücks in y- und z-Richtung auf einem Kreisbogen entlang der konusförmigen Stirnseite 8 kann also ein Versatzwinkel $\xi$ eingebracht werden, der die Fehlpassung von Feilschneidenwinkel $\alpha$ und Konuswinkel $\kappa$ ausgleicht, mit

$$\alpha=90°-\Theta2+\kappa+\xi.$$

In der Variante von Fig. 5a, 5b ist dabei $\xi$ stets negativ.

Man beachte, dass es auch möglich ist, in Schritt 2) gleichzeitig einen Azimuthwinkel $\varphi2\neq0$ und einen Versatz in y- und/oder z-Richtung der Feilkontaktzone gegenüber der Kontaktzone aus Schritt 1) zu nutzen, um das Werkzeug flach (linienhaft) an das Werkstück anlegen zu können (nicht näher dargestellt). Dadurch kann eine besonders große Flexibilität bei der Feilbearbeitung erreicht werden.

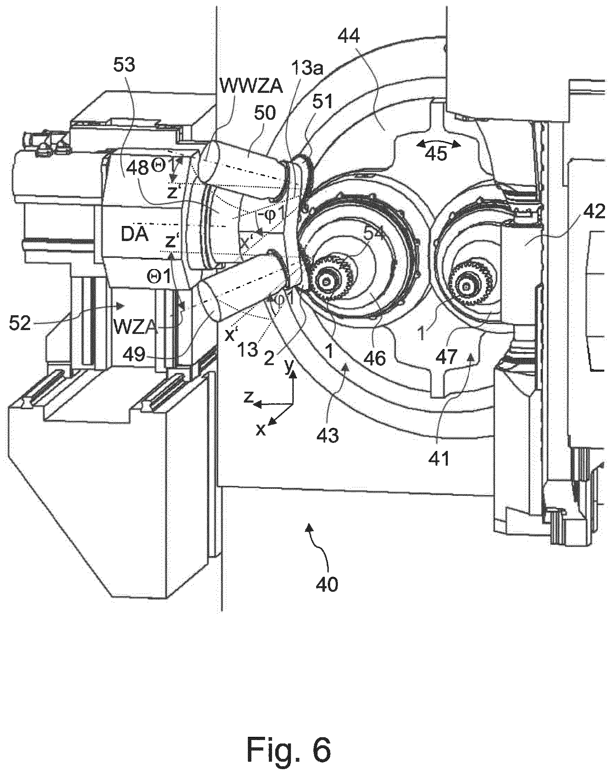

**Fig. 6** zeigt eine Vorrichtung 40 zum kombinierten Wälzschälanfasen und Feilen von Werkstücken gemäß der Erfindung.

Die Vorrichtung 40 verfügt über eine Station 41 zur Wälzfräsbearbeitung von Werkstücken 1 mit einem Wälzfräser 42, der mit üblichen Rotations- und Bewegungsachsen ausgestattet ist. Weiterhin verfügt die Vorrichtung 40 über eine Station 43 zum Wälzschälanfasen und Feilen von Werkstücken 1, die unten näher erläutert wird; die Station 43 wird meist auch für Werkstückwechsel genutzt, da das Anfasen und Feilen eines Werkstücks 1 meist weniger Zeit benötigt als das Wälzfräsen eines Werkstücks 1.

In der gezeigten Ausführungsform ist ein Drehhalter 44 vorgesehen, der in Pfeilrichtung 45 rotierbar ist und dadurch zwei Werkstückspindeln 46, 47 an den Stationen 41, 43 positionieren und insbesondere vertauschen kann. Der Drehhalter 44 ist hier um eine horizontale Achse drehbar, und die Werkstückspindelachsen, um welche die Werkstücke 1 drehbar sind, sind hier ebenfalls horizontal angeordnet. Typischerweise werden Werkstücke 1 an der Station 43 auf einer Werkstückspindel 46, 47 aufgespannt, durch Drehen des Drehhalters 44 zur Station 41 zum Wälzfräsen verbracht, durch Drehen des Drehhalters 44 zurück zur Station 41 zum Anfasen und Feilen verbracht und wieder ausgespannt; dieser Ablauf findet an beiden Werkstückspindeln 46, 47 parallel und um eine halbe Phase versetzt statt.

Im Folgenden wird die Station 43 zum Anfasen und Feilen von Werkstücken 1 näher erläutert.

Auf einer Werkzeugspindel-Halterung 48 sind hier eine Werkzeugspindel 49 mit einem verzahnten Werkzeug 2 und auch eine weitere Werkzeugspindel 50 mit einem weiteren verzahnten Werkzeug 51 angeordnet. Das Werkzeug 2 und hier auch das weitere Werkzeug 51 sind jeweils als Kombinationswerkzeug zum Wälzschälanfasen und Feilen mit zwei Bearbeitungsabschnitten ausgebildet (vgl. z. B. Fig. 1 hierzu). Die Werkstückspindel-Halterung 48 kann entlang der zueinander orthogonalen Richtungen x, y, z mittels einer motorischen Verfahreinrichtung (Kreuzschlittensystem) 52 linear verfahren werden, und auch mit einer motorischen Dreheinrichtung 53 um eine Drehachse DA, die parallel zur z-Richtung verläuft, gedreht werden. Die x-Richtung ist hierbei horizontal und parallel zur Werkstückspindelachse der Werkstückspindel 46 ausgerichtet, die y-Richtung verläuft vertikal, und die z-Richtung wiederum horizontal.

In der gezeigten Verfahrposition wird gerade mit dem Werkzeug 2 auf der Werkzeugspindel 49 am Werkstück 1 auf der Werkstückspindel 46 an dessen Rückseite eine erste Fase gefertigt; das Werkzeug 2 kontaktiert dazu das Werkstück 1 mit einem ersten Bearbeitungsabschnitt von der linken Seite, also von der z-Richtung her kommend. Zur Fertigung der zweiten Fase an der Rückseite wird die Werkzeugspindel-Halterung 48 mit der motorischen Verfahreinrichtung (Kreuzschlittensystem) 52 so umpositioniert, dass das weitere Werkzeug 51 auf der weiteren Werkzeugspindel 50 das Werkstück 1 von der linken Seite kontaktiert.

Man beachte, dass die Werkzeugachse WZA der Werkzeugspindel 49 um einen Azimutwinkel $\varphi 1$ gegen die x-Richtung nach unten verschwenkt ist (vgl. die zugehörige parallelverschobene x'-Achse und die Projektion 13 der Werkzeugachse WZA), und dass die weitere Werkzeugachse WWZA der weiteren Werkstückspindel 50 um einen gegengleichen Azimutwinkel $-\varphi 1$ gegen die x-Richtung nach oben verschwenkt ist (vgl. die zugehörige parallelverschobene x'-Achse und die Projektion 13a der weiteren Werkzeugachse WWZA). Man beachte weiterhin, dass die Werkzeugachse WZA der Werkzeugspindel 49 um einen Polarwinkel $\Theta 1$ gegen die z-Richtung verschwenkt ist (vgl. die zugehörige parallelverschobnene Achse z'), und die weitere Werkzeugachse WWZA der weiteren Werkzeugspindel 50 um den gleichen Polarwinkel $\Theta 1$ gegen die z-Richtung verschwenkt ist (vgl. wiederum die zugehörige parallelverschobene Achse z').

Zum Feilen (in Fig. 6 nicht näher dargestellt) der rückwärtigen Stirnseite der Verzahnung des Werkstücks 1 kann mittels der motorischen Dreheinrichtung 53 die Werkzeugspindel-Halterung 48 so gedreht werden, dass ein gewünschter Azimuthwinkel $\varphi 2$ für die Werkzeugachse WZA des zum Feilen eingesetzten Werkzeugs 2 erhalten wird, beispielsweise $\varphi 2=0°$. Mittels der Verfahreinrichtung 52 kann weiterhin eine gewünschte Feilkontaktzone zwischen Werkzeug 2 und Werkstück 1 eingerichtet werden, beispielsweise identisch zum Ort der Kontaktzone beim Wälzschälanfasen (also x=0, y=0, z entsprechend dem Werkstückradius). Der Polarwinkel $\Theta 1$ ist hier fest durch die Vorrichtung 40 vorgegeben (da die Werkzeugspindel 49 mit der Werkstückspinel-Halterung 48 um die Drehachse DA rotiert, die zur z-Richtung parallel ist), so dass auch beim Feilen ein Polarwinkel $\Theta 2=\Theta 1$ eingesetzt wird; alternativ ist es auch möglich, eine weitere Schwenkmechanik zur Veränderung des Polarwinkels $\Theta 1$ bzw. $\Theta 2$ vorzusehen (nicht dargestellt).

Beim Feilen wird das Werkstück 1 mit einem zweiten Bearbeitungsabschnitt des Werkzeugs 2 bearbeitet.

Man beachte, dass beide Fasen des Werkstücks 1 (linksseitige und rechtsseitige Fase) der hier rückwärtigen Stirnseite des Werkstücks 1 in einem einzigen Feilbearbeitungsschritt mit nur einem der Werkzeuge 2, 51 durch Feilen entgratet werden können; hierfür genügt es, nur eines der beiden Werkzeuge 2, 51 als Kombinationswerkzeug mit zwei Bearbeitungsabschnitten auszuführen. In der erläuterten Ausführungsform sind beide Werkzeuge 2, 51 als Kombinationswerkzeug ausgeführt, so dass je nach Wunsch nur eines der Werkzeuge 2, 51 oder alternativ beide Werkzeuge 2, 51 zum Feilen eingesetzt werden können. Insbesondere ist es möglich, eines der Werkzeuge 2, 51 zum Feilen einer ersten Stirnseite des Werkstücks 1, und das andere der Werkzeuge 2, 51 zum Feilen einer zweiten Stirnseite des Werkstücks 1 (siehe unten) einzusetzen. Für eine besonders schnelle Fertigung wird bevorzugt dasjenige Werkzeug 2, 51 zum Feilen an einer Stirnseite eines Werkstücks 1 eingesetzt, mit dem die letzte der beiden Fasen an dieser Stirnseite des Werkstücks 1 gefertigt wurde, typischerweise direkt im Anschluss an das Fertigen dieser letzten Fase.

Während des Feilens rotieren jeweils das Werkstück 1 und das Werkzeug 2. Beim Feilen erfolgt die Rotation des Werkzeugs 2 praktisch unabhängig von der Rotation des Werkstücks 1. Um eine Schnittgeschwindigkeit zu erzeugen, ist eine Differenzgeschwindigkeit zwischen Werkzeug 2 und Werkstück 1 eingestellt; das Werkstück 1 und das Werkzeug 2 rotieren asynchron zueinander. Man beachte, dass das Feilen sowohl im Gegenlauf als auch im Gleichlauf erfolgen kann.

Zur Fertigung der beiden Fasen an der Vorderseite 54 des Werkstücks 1 in der Werkstückspindel 46 wird die Werkzeugspindel-Halterung 48 mit der motorischen Dreheinrichtung 53 um 180° um die Drehachse DA geschwenkt. Sodann kann mit dem Werkzeug 2 die erste Fase und mit dem weiteren Werkzeug 51 die zweite Fase an der Vorderseite 54 des Werkstücks 1 angebracht werden, analog zur obigen Erläuterung (nicht näher dargestellt). Sodann kann sich wiederum das Feilen anschließen, analog zur obigen Erläuterung (nicht näher dargestellt).

Es wird angemerkt, dass die insgesamt vier Fasen grundsätzlich in beliebiger Reihenfolge am Werkstück 1 angebracht und gefeilt werden können.

**Patentansprüche**

1. Verfahren zur Bearbeitung eines verzahnten Werkstücks (1),
   wobei das Verfahren umfasst einen

   Schritt 1) Fertigen einer Fase an dem verzahnten Werkstück (1) durch Wälzschälen,
   wobei ein um eine Werkzeugachse (WZA) rotierendes Werkzeug (2) mit einem verzahnten ersten Bearbeitungsabschnitt (6) in einer Kontaktzone (KZ) an dem um eine Werkstückachse (WSA) rotierenden Werkstück (1) abgleitet,
   wobei die Werkstückachse (WSA) eine x-Richtung definiert, und das Lot der Kontaktzone (KZ) auf die Werkstückachse (WSA) eine z-Richtung definiert, und die x-Richtung, eine y-Richtung und die z-Richtung ein rechtwinkliges Koordinatensystem bilden,
   und wobei die Werkzeugachse (WZA) um einen Azimutwinkel $\varphi 1 \neq 0°$ gegen die x-Richtung verschwenkt ist, und die Werkzeugachse (WZA) weiterhin um einen Polarwinkel $\Theta 1 < 90°$ gegen die z-Richtung verschwenkt ist,

   **dadurch gekennzeichnet,**
   **dass** das Werkzeug (2) als ein Kombinationswerkzeug gewählt ist, das zusätzlich zum verzahnten, ersten Bearbeitungsabschnitt (6) weiterhin einen zweiten Bearbeitungsabschnitt (9) aufweist, wobei der zweite Bearbeitungsabschnitt (9) bezüglich einer Schnittebene (SE), die die Werkzeugachse (WZA) enthält, unter einem Feilschneidenwinkel $\alpha > 0°$ gegenüber dem ersten Bearbeitungsabschnitt (6) verläuft,
**dass** das Verfahren weiterhin umfasst einen Schritt 2) Feilen einer Stirnseite (8) des verzahnten Werkstücks (1), die an die in Schritt 1) gefertigte Fase angrenzt, wobei das rotierende Werkzeug (2) mit dem zweiten Bearbeitungsabschnitt (9) in einer Feilkontaktzone (FZ) an dem um die Werkstückachse (WSA) rotierenden Werkstück (1) abgleitet,
und **dass** die Schritte 1) und 2) in derselben Aufspannung des Werkstücks (1) erfolgen.

2. Verfahren nach Anspruch 1, **dadurch gekennzeichnet, dass** das Feilen in Schritt 2) mit einem Polarwinkel $\Theta 2$ des Werkzeugs (2) erfolgt, der gleich ist dem Polarwinkel $\Theta 1$ beim Fertigen der Fase durch Wälzschälen in Schritt 1).

3. Verfahren nach Anspruch 1 oder 2, **dadurch gekennzeichnet, dass** der Feilschneidenwinkel $\alpha$ des Werkzeugs (2) so gewählt ist, dass gilt:

$$\alpha = 90° - \Theta 2 + \kappa,$$

mit $\kappa$: Konuswinkel der Stirnseite (8) des Werkstücks (1) gegenüber einem Radiusvektor (12) des Werkstücks (1).

4. Verfahren nach Anspruch 3, **dadurch gekennzeichnet, dass** in Schritt 2) der Azimuthwinkel zu $\varphi 2 = 0$ gewählt ist.

5. Verfahren nach Anspruch 3, **dadurch gekennzeichnet, dass** in Schritt 2) der Azimuthwinkel zu $\varphi 2 \neq 0$ gewählt ist und weiterhin die Feilkontaktzone (FZ) gegenüber der Kontaktzone (KZ) von Schritt 1) in y-Richtung und/oder z-Richtung versetzt ist.

6. Verfahren nach Anspruch 1 oder 2, **dadurch gekennzeichnet, dass** der Feilschneidenwinkel $\alpha$ des Werkzeugs (2) so gewählt ist, dass gilt:

$$\alpha = 90° - \Theta 2 + \kappa + \xi,$$

mit $\kappa$: Konuswinkel der Stirnseite (8) des Werkstücks (1) gegenüber einem Radiusvektor (12) des Werkstücks (1), und $\xi$: Versatzwinkel, wobei $|\xi| > 0$,
und dass in Schritt 2) der Azimuthwinkel zu $\varphi 2 \neq 0$ gewählt ist und/oder die Feilkontaktzone (FZ) gegenüber der Kontaktzone (KZ) von Schritt 1) in y-Richtung und/oder z-Richtung versetzt ist.

7. Verfahren nach einem der vorhergehenden Ansprüche, **dadurch gekennzeichnet, dass** in der Schnittebene (SE), die die Werkzeugachse (WZA) enthält, der verzahnte, erste Bearbeitungsabschnitt (6) des Werkzeugs (2) senkrecht zur Werkzeugachse (WZA) verläuft.

8. Verfahren nach einem der vorhergehenden Ansprüche, **dadurch gekennzeichnet, dass** für den Azimuthwinkel φ1 in Schritt 1) und einen Azimuthwinkel φ2 in Schritt 2) gilt: |φ1|>|φ2|.

9. Verfahren nach einem der Ansprüche 1 bis 8, **dadurch gekennzeichnet, dass** der zweite Bearbeitungsabschnitt (9) eine definierte Schneide ausbildet.

10. Verfahren nach einem der Ansprüche 1 bis 8, **dadurch gekennzeichnet, dass** der zweite Bearbeitungsabschnitt (9) eine undefinierten Schneide ausbildet.

11. Vorrichtung (40) zur Bearbeitung eines verzahnten Werkstücks (1), wobei die Vorrichtung (40) ausgebildet ist

> - mit einer Werkstückspindel (46, 47) zum Rotieren des verzahnten Werkstücks (1) um eine Werkstückachse (WSA), die entlang einer x-Richtung verläuft,
> - mit einer Werkzeugspindel (49) zum Rotieren eines Werkzeugs (2) um eine Werkzeugachse (WZA),
> - das Werkzeug (2), das auf der Werkzeugspindel (49) angeordnet ist, mit einem verzahnten, ersten Bearbeitungsabschnitt (6) zum Fertigen einer Fase am verzahnten Werkstück (2) durch Wälzschälen,
> - und mit einer Werkzeugspindel-Halterung (48), an welcher die Werkzeugspindel (49) gehalten ist, wobei die Werkzeugspindel-Halterung (48) mittels einer motorischen Verfahreinrichtung (52) linear in die x-Richtung, eine y-Richtung und eine z-Richtung verfahrbar ist, wobei die x-Richtung, die y-Richtung und die z-Richtung ein rechtwinkliges Koordinatensystem bilden, wobei die Werkzeugspindel-Halterung (48) mittels einer motorischen Dreheinrichtung (53) verschwenkbar ist, so dass zumindest ein Azimuthwinkel φ, mit dem die Werkzeugachse (WZA) gegen die x-Richtung verschwenkt ist, verstellbar ist und ein Azimutwinkel φ≠0° einstellbar ist, und wobei weiterhin ein Polarwinkel Θ<90°, mit dem die Werkzeugachse (WZA) gegen die z-Richtung verschwenkt ist, von der Vorrichtung (40) vorgegeben ist oder mit der Vorrichtung (40) einstellbar ist,

> **dadurch gekennzeichnet,**
> **dass** das Werkzeug (2) als Kombinationswerkzeug mit dem verzahnten, ersten Bearbeitungsabschnitt (6) und weiterhin mit einem zweiten Bearbeitungsabschnitt (9) zum Feilen einer Stirnseite (8) des Werkstücks (1) ausgebildet ist, wobei der zweite Bearbeitungsabschnitt (9) bezüglich einer Schnittebene (SE), die die Werkzeugachse (WZA) enthält, unter einem Feilschneidenwinkel α > 0° gegenüber dem ersten Bearbeitungsabschnitt (6) verläuft, und **dass** die Vorrichtung (40) dazu ausgebildet ist, nacheinander bei auf der Werkstückspindel (46, 47) angeordnetem verzahntem Werkstück (1) in derselben Aufspannung des Werkstücks (1) zunächst mit dem verzahnten, ersten Bearbeitungsabschnitt (6) eine Fase am Werkstück (1) durch Wälzschälen zu fertigen und danach mit dem zweiten Bearbeitungsabschnitt (9) die Stirnseite (8) des Werkstücks (1), die an die gefertigte Fase angrenzt, zu feilen.

12. Vorrichtung (40) nach Anspruch 11, **dadurch gekennzeichnet, dass** die Werkzeugspindel-Halterung (48) mittels der motorischen Dreheinrichtung (53) um eine Drehachse (DA) rotierbar ist, die entlang der z-Richtung verläuft.

13. Vorrichtung (40) nach Anspruch 11 oder 12, **dadurch gekennzeichnet, dass** durch die Vorrichtung (40) der Polarwinkel Θ vorgegeben ist.

14. Vorrichtung (40) nach einem der Ansprüche 11 bis 13, **dadurch gekennzeichnet, dass** auf der Werkzeugspindel-Halterung (48) die Werkzeugspindel (49) und eine weitere Werkzeugspindel (50) zum Rotieren eines weiteren Werkzeugs (51) um eine weitere Werkzeugachse (WWZA) gehalten sind, insbesondere wobei das weitere Werkzeug (51) ebenfalls als Kombinationswerkzeug ausgebildet ist.

15. Vorrichtung (40) nach einem der Ansprüche 11 bis 14, **dadurch gekennzeichnet, dass** die Vorrichtung (40) ausgebildet ist zur Durchführung eines Verfahrens nach einem der Ansprüche 1 bis 10.

**Claims**

1. Method of processing a toothed workpiece (1); the method comprising:

> a step 1) of producing a chamfer on the toothed workpiece (1) by hob peeling, wherein a tool (2) that rotates about a tool axis (WZA) slides with a toothed first processing section (6) in a contact zone (KZ) on the workpiece (1) that rotates about a workpiece axis (WSA), wherein the workpiece axis (WSA) defines an x direction and the perpendicular of the contact zone (KZ) to the workpiece axis (WSA) defines a z direction, and the x direction, a y direction and the z direction form a right-angled coordinate system,

and wherein the tool axis (WZA) is pivoted by an azimuth angle $\varphi1 \neq 0°$ against the x direction and the tool axis (WZA) is further pivoted about a polar angle $\Theta1 < 90°$ against the z direction,

**characterized in that**
the tool (2) is selected as a combination tool which further comprises a second processing section (9) in addition to the toothed first processing section (6), wherein the second processing section (9) extends at a file cutting angle $\alpha > 0°$ against the first processing section (6) with respect to a cutting plane (SE) containing the tool axis (WZA),
that the method further comprises:
a step 2) of filing an end face (8) of the toothed workpiece (1), which borders the chamfer produced in step 1), wherein the rotating tool (2) slides with the second processing section (9) in a file contact zone (FZ) on the workpiece (1) that rotates about the workpiece axis (WSA), and that the steps 1) and 2) are performed in the same clamping of the workpiece (1).

2. Method according to claim 1, **characterized in that** the filing in step 2) is performed with a polar angle $\Theta2$ of the tool (2), which is equal to the polar angle $\Theta1$ during production of the chamfer through hob peeling in step 1).

3. Method according to claim 1 or 2, **characterized in that** the file cutting angle $\alpha$ of the tool (2) is selected such that the following applies:

$$\alpha = 90° - \Theta2 + \kappa,$$

with $\kappa$: cone angle of the end face (8) of the workpiece (1) with respect to a radius vector (12) of the workpiece (1).

4. Method according to claim 3, **characterized in that** in step 2) the azimuth angle is selected to be $\varphi2 = 0$.

5. Method according to claim 3, **characterized in that** in step 2) the azimuth angle is selected to be $\varphi2 \neq 0$ and that further the file contact zone (FZ) is offset in the y direction and/or the z direction with respect to the contact zone (KZ) of step 1).

6. Method according to claim 1 or 2, **characterized in that** the file cutting angle $\alpha$ of the tool (2) is selected such that the following applies:

$$\alpha = 90° - \Theta2 + \kappa + \xi,$$

with $\kappa$: cone angle of the end face (8) of the workpiece (1) with respect to a radius vector (12) of the workpiece (1), and $\xi$: offset angle,

wherein $|\xi| > 0$,
and that in step 2) the azimuth angle is selected to be $\varphi2 \neq 0$ and/or the file contact zone (FZ) is offset with respect to the contact zone (KZ) of step 1) in the y direction and/or z direction.

7. Method according to any one of the preceding claims, **characterized in that** in the cutting plane (SE) containing the tool axis (WZA), the toothed first processing section (6) of the tool (2) extends perpendicularly to the tool axis (WZA).

8. Method according to any one of the preceding claims, **characterized in that** the following applies for the azimuth angle $\varphi1$ in step 1) and an azimuth angle $\varphi2$ in step 2): $|\varphi1| > |\varphi2|$.

9. Method according to any one of the claims 1 to 8, **characterized in that** the second processing section (9) forms a defined cutting edge.

10. Method according to any one of the claims 1 to 8, **characterized in that** the second processing section (9) forms an undefined cutting edge.

11. Device (40) for processing a toothed workpiece (1), wherein the device (40) is formed

- with a workpiece spindle (46, 47) for rotating the toothed workpiece (1) about a workpiece axis (WSA) that extends along an x direction,
- with a tool spindle (49) for rotating a tool (2) about a tool axis (WZA),
- the tool (2) being arranged on the tool spindle (49), the tool (2) having a toothed first processing section (6) for producing a chamfer on the toothed workpiece (2) by hob peeling,
- and with a tool spindle holder (48) on which the tool spindle (49) is held, wherein the tool spindle holder (48) can be moved linearly in the x direction, a y direction and a z direction by means of a motorized movement device (52), wherein the x direction, the y direction and the z direction form a right-angled coordinate system, wherein the tool spindle holder (48) can be pivoted by means of a motorized rotation device (53) such that at least an azimuth angle $\varphi$ at which the tool axis (WZA) is pivoted against the x direction can be adjusted and an azimuth angle $\varphi \neq 0°$ can be set, and wherein furthermore a polar angle $\Theta < 90°$ at which the tool axis (WZA) is pivoted against the z direction is predetermined by the device (40) or can be set by the device (40), **characterized in that**

the tool (2) is formed as combination tool with the toothed first processing section (6) and further with a second processing section (9) for filing an end face (8) of the workpiece (1), wherein the second processing section (9) extends at a file cutting angle $\alpha > 0°$ against the first processing section (6) with respect to a cutting plane (SE) containing the tool axis (WZA), and that the device (40) is designed to initially produce with the toothed first processing section (6) a chamfer on the workpiece (1) through hob peeling and then consecutively file with the second processing section (9) the end face (8) of the workpiece (1) bordering the produced chamfer, with the toothed workpiece (1) being arranged on the workpiece spindle (46, 47) in the same clamping of the workpiece (1).

12. Device (40) according to claim 11, **characterized in that** the tool spindle holder (48) can be rotated by means of the motorized rotation device (53) about an axis of rotation (DA) extending along the z direction.

13. Device (40) according to claim 11 or 12, **characterized in that** the polar angle $\Theta$ is predetermined by the device (40).

14. Device (40) according to any one of the claims 11 to 13, **characterized in that** the tool spindle (49) and a further tool spindle (50) for rotating a further tool (51) about a further tool axis (WZA) are held on the tool spindle holder (48), in particular wherein the further tool (51) is also designed as combination tool.

15. Device (40) according to any one of the claims 11 to 14, **characterized in that** the device (40) is designed to perform a method according to any one of the claims 1 to 10.

## Revendications

1. Procédé d'usinage d'une pièce dentée (1), le procédé comprenant une
   étape 1) de réalisation d'un chanfrein sur la pièce dentée (1) par décolletage en développante,
   un outil (2) en rotation autour d'un axe d'outil (WZA) pourvu d'une première section d'usinage dentée (6) dans une zone de contact (KZ) glissant sur la pièce (1) en rotation autour d'un axe de pièce (WSA),
   l'axe de pièce (WSA) définissant une direction x et la perpendiculaire de la zone de contact (KZ) à l'axe de pièce (WSA) définissant une direction z, et la direction x, une direction y et la direction z formant un système de coordonnées rectangulaire,
   et l'axe d'outil (WZA) étant amené à pivoter par rapport à la direction x d'un angle d'azimut $\varphi1 \neq 0°$, et l'axe d'outil (WZA) étant en outre amené à pivoter d'un angle polaire $\Theta1 < 90°$ par rapport à la direction z,
   **caractérisé en ce que**

l'outil (2) est sélectionné comme un outil combiné qui, en plus de la première section d'usinage dentée (6), comporte en outre une deuxième section d'usinage (9), la deuxième section d'usinage (9) s'étendant, par rapport à un plan de coupe (SE) contenant l'axe d'outil (WZA), à un angle de coupe par limage $\alpha > 0°$ par rapport à la première section d'usinage (6), **en ce que** le procédé comprend en outre une étape 2) de limage d'un côté frontal (8) de la pièce dentée (1) qui est adjacent au chanfrein réalisé à l'étape 1), l'outil rotatif (2) pourvu de la deuxième section d'usinage (9) dans une zone de contact de limage (FZ) glissant sur la pièce (1) en rotation autour de l'axe de pièce (WSA),

et **en ce que** les étapes 1) et 2) ont lieu dans le même serrage de la pièce (1).

2. Procédé selon la revendication 1, **caractérisé en ce que** le limage à l'étape 2) a lieu avec un angle polaire $\Theta2$ de l'outil (2), qui est identique à l'angle polaire $\Theta1$ lors de la réalisation du chanfrein par décolletage en développante à l'étape 1).

3. Procédé selon la revendication 1 ou 2, **caractérisé en ce que** l'angle de coupe par limage $\alpha$ de l'outil (2) est sélectionné de telle sorte que : $\alpha = 90° - \Theta2 + \kappa$, avec $\kappa$ : angle de conicité du côté frontal (8) de la pièce (1) par rapport à un vecteur de rayon (12) de la pièce (1).

4. Procédé selon la revendication 3, **caractérisé en ce que**, dans l'étape 2), l'angle d'azimut est sélectionné pour $\varphi2 = 0$.

5. Procédé selon la revendication 3, **caractérisé en ce que**, dans l'étape 2), l'angle d'azimut est sélectionné pour $\varphi2 \neq 0$, et en outre la zone de contact de limage (FZ) est décalée par rapport à la zone de contact (KZ) de l'étape 1) dans la direction y et/ou dans la direction z.

6. Procédé selon la revendication 1 ou 2, **caractérisé en ce que** l'angle de coupe par limage $\alpha$ de l'outil (2) est sélectionné de telle sorte que :

$$\alpha = 90° - \Theta2 + \kappa + \zeta,$$

avec $\kappa$ : angle de conicité du côté frontal (8) de la pièce (1) par rapport à un vecteur de rayon (12) de la pièce (1), et $\zeta$ : angle de décalage, avec $|\zeta| > 0$, et **en ce que**, dans l'étape 2), l'angle d'azimut est sélectionné pour $\varphi2 \neq 0$, et/ou la zone de contact de limage (FZ) est décalée par rapport à la zone de contact (KZ) de l'étape 1) dans la direction y et/ou dans la direction z.

7. Procédé selon l'une quelconque des revendications précédentes, **caractérisé en ce que**, dans le plan de coupe (SE) contenant l'axe d'outil (WZA), la première section d'usinage dentée (6) de l'outil (2) s'étend transversalement à l'axe d'outil (WZA).

8. Procédé selon l'une quelconque des revendications précédentes, **caractérisé en ce que**, pour l'angle d'azimut φ1 dans l'étape 1) et un angle d'azimut φ2 dans l'étape 2 : |φ1| > |φ2|.

9. Procédé selon l'une quelconque des revendications 1 à 8, **caractérisé en ce que** la deuxième section d'usinage (9) forme une coupe définie.

10. Procédé selon l'une quelconque des revendications 1 à 8, **caractérisé en ce que** la deuxième section d'usinage (9) forme une coupe non définie.

11. Dispositif (40) pour l'usinage d'une pièce dentée (1), le dispositif (40) étant configuré

    - avec une broche de pièce (46, 47) pour la rotation de la pièce dentée (1) autour d'un axe de pièce (WSA), qui s'étend le long d'une direction x,
    - avec une broche d'outil (49) pour la rotation d'un outil (2) autour d'un axe d'outil (WZA),
    - l'outil (2), qui est agencé sur la broche d'outil (49), étant pourvu d'une première section d'usinage dentée (6) pour la réalisation d'un chanfrein sur la pièce dentée (2) par décolletage en développante,
    - et avec un support de broche d'outil (48), sur lequel la broche d'outil (49) est supportée, le support de broche d'outil (48) étant déplaçable linéairement dans la direction x, une direction y et une direction z au moyen d'un appareil de déplacement motorisé (52), la direction x, la direction y et la direction z formant un système de coordonnées rectangulaire, le support de broche d'outil (48) pouvant être amené à pivoter au moyen d'un appareil de rotation motorisé (53) de telle sorte qu'au moins un angle d'azimut φ, avec lequel l'axe d'outil (WZA) est amené à pivoter par rapport à la direction x, puisse être réglé et qu'un angle d'azimut φ ≠ 0 puisse être ajusté, et en outre un angle polaire Θ < 90°, avec lequel l'axe d'outil (WZA) est amené à pivoter par rapport à la direction z, étant prédéterminé par le dispositif (40) ou pouvant être ajusté avec le dispositif (40),

    **caractérisé en ce que**
    l'outil (2) est configuré comme outil combiné avec la première section d'usinage dentée (6) et en outre une deuxième section d'usinage (9) pour le limage d'un côté frontal (8) de la pièce (1), la deuxième section d'usinage (9) s'étendant, par rapport à un plan de coupe (SE) contenant l'axe d'outil (WZA), à un angle de coupe par limage α > 0° par rapport à la première section d'usinage (6),
et **en ce que** le dispositif (40) est configuré pour, successivement, avec la pièce dentée (1) agencée sur la broche de pièce (46, 47) dans le même serrage de la pièce (1), tout d'abord réaliser un chanfrein sur la pièce (1) par décolletage en développante avec la première section d'usinage dentée (6) et ensuite limer le côté frontal (8) de la pièce (1), qui est adjacent au chanfrein réalisé, avec la deuxième section d'usinage (9).

12. Dispositif (40) selon la revendication 11, **caractérisé en ce que** le support de broche d'outil (48) peut être mis en rotation au moyen de l'appareil de rotation motorisé (53) autour d'un axe de rotation (DA), qui s'étend le long de la direction z.

13. Dispositif (40) selon la revendication 11 ou 12, **caractérisé en ce que** l'angle polaire Θ est prédéterminé par le dispositif (40).

14. Dispositif (40) selon l'une quelconque des revendications 11 à 13, **caractérisé en ce que** la broche d'outil (49) et une broche d'outil supplémentaire (50) pour la mise en rotation d'un outil supplémentaire (51) autour d'un axe d'outil supplémentaire (WWZA) sont supportés sur le support de broche d'outil (48), l'outil supplémentaire (51) étant notamment également configuré comme outil combiné.

15. Dispositif (40) selon l'une quelconque des revendications 11 à 14, **caractérisé en ce que** le dispositif (40) est configuré pour la réalisation d'un procédé selon l'une quelconque des revendications 1 à 10.

Fig. 1

Fig. 2a

Fig. 2b

Fig. 3a

Fig. 3b

# Fig. 4a

# Fig. 4b

Fig. 5b

Fig. 5a

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014218082 A1